# EUROPEAN PATENT SPECIFICATION

(11) **EP 1 155 486 B1**
(45) Date of publication and mention of the grant of the patent: **23.02.2011**
(21) Application number: 00903019.8
(22) Date of filing: 17.01.2000
(51) Int. Cl.: H02B 1/24

(54) **MEDIUM VOLTAGE SWITCHING DEVICE**
MITTELSPANNUNGS-SCHALTVORRICHTUNG
DISPOSITIF DE COMMUTATION MOYENNE TENSION

(30) Priority: 29.01.1999 NL 1011173
(43) Date of publication of application: 21.11.2001
(73) Proprietor: Eaton Electric N.V., 7559 SC Hengelo (NL)
(72) Inventor: SCHOONENBERG, Gerald, Cornelis, NL-7559 CR Hengelo (NL)
(74) Representative: Tabeling, Marcella M.J.
(86) International application number: PCT/NL2000/000031
(87) International publication number: WO 2000/045484

(56) References cited:
- DE-A- 1 590 034
- DE-U- 29 713 268

## Description

The invention relates to a medium voltage switching device for electrical medium voltage networks, comprising series-connected first and second connecting fields each provided with a switch for connection to the medium voltage network, a third connecting field connected to the connection of the first and the second connecting fields for connecting electric power consumers, and means for signalling an excessive current flowing into the third connecting field.

A switching device of this kind is known from German patent application DE-A-3421265.

The electric power supply of a country or a region generally comprises a number of distributed power stations, which are connected via a high-voltage network. The term high voltage is understood to mean voltages higher than about 50 kV.

Connected to the high-voltage network are switching and transformer stations for distributing electric energy via so-called medium voltage networks, with voltages in the range of 3 - 25 kV. These medium voltage networks generally have an open, ring-shaped structure comprising two separate branches, with each branch of the ring including a number of series-connected medium voltage switching devices. In English specialists literature also referred to as "Ring Main Units". The ring can be closed by switching of the switching devices disposed at the ends of the branches.

From these medium voltage switching devices a branched low-voltage network extends, to which the end consumers are connected. The term low voltage as used herein is understood to mean voltages of 100 V - 1 kV. It is noted that large-scale electric power consumers may be connected directly to the medium voltage network.

The ring-shaped structure of the medium voltage network has the advantage that in case of failure of a connecting field of a switching device connected thereto the consumers can still be provided with electric energy, after switching, via the other intact connecting field.

In addition to the switches in the connecting fields for the medium voltage network, which are configured as so-called circuit breakers or make and break switches, the prior art medium voltage switching devices comprise a power switch in the connecting field to which the consumers are connected. Unlike the make and break switches, this power switch functions as a protection against overload and short-circuit currents in the corresponding connecting field.

Make and break switches and power switches for medium voltage switching devices must be of a suitable robust construction, such as the well-known vacuum switches or switches filled with an electrically insulating gas, such as the well-known SF₆ gas, for example. Furthermore, the switches are generally connected via a rail system and so-called isolating/earthing switches.

Because of this construction, the prior art medium voltage switching devices constitute a relatively high cost factor in the power distribution networks, also because of their relatively large dimensions, which makes it necessary to arrange special locations for installing such switching devices.

Accordingly, it is an object of the present invention to provide a novel medium voltage switching device which is preferably cheaper than the prior art switching devices, which is smaller in volume and by means of which it is possible to enhance the quality of the electric power supply in terms of availability, inter alia by a better utilization of the typical medium voltage network structure.

According to the invention, this object is in a first aspect accomplished by means of a medium voltage switching device comprising control means connected to the switches of the first and the second connecting field and to the current signalling means, which function to open the two switches in response to the occurrence of an excessive current in the third connecting field.

Unlike the prior art medium voltage switching devices, the switching device according to the invention does not include a switch in the third connecting field, that is, the field to which the power consumers are connected. Impermissible, excessive currents, such as overload and short-circuit currents in the connecting field to the consumers, are interrupted in the switching device according to the invention by opening the switches of the first and the second connecting field jointly.

The medium voltage switching device according to the invention is based on the insight that excessive currents in the third connecting field occur only very rarely in practice, and mostly only in case of faults in a transformer supplying the low-voltage network which is directly connected to the third connecting field. The reason for this is that the low-voltage network to which the consumers are connected is itself provided with various selective protective devices for disconnecting any overload and/or short-circuit currents that may occur therein.

In the rare case of an excessive, impermissible current occurring in the third connecting field, it is considered permissible, therefore, for the switching device to interrupt the branch of the medium voltage network in which it is incorporated by opening the two switches in the first and the second connecting field. With the prior art medium voltage switching devices, such an interruption occurs in case of excessive currents in the medium voltage network itself, for example in case of cable (short) circuits, which occur more often in practice than the faults in the third connecting field to the consumers referred to above. Thanks to the ring-shaped network structure, the energy supply to the parts behind an interrupted branch can be restored via the other branch after switching.

Due to the absence of a switch in the connecting field to the consumers, the switching device according to the invention can be made not only cheaper but also smaller. In view of the lower capital outlay for the switching device according to the invention, a more fine-meshed structure of the medium voltage distribution network is within the bounds of the possible, which in turn contributes towards enhancing the overall quality of the electric power supply as aimed at.

In a preferred embodiment of the switching device according to the invention, the means for signalling the occurrence of an excessive current in the third connecting field comprise current measuring means connected thereto. Current measuring means which are suitable for this purpose are known per se in practice.

In another embodiment of the switching device according to the invention the means for signalling the occurrence of an excessive current comprise first current direction measuring means connected to the first connecting field and second current direction measuring means connected to the second connecting field, wherein the control means are arranged for opening the switches when the vectorial sum of the current direction measuring means results in the occurrence of an excessive current in the direction of the third connecting field.

By arranging the switches in the first and the second connecting field of yet another embodiment of the switching device according to the invention such that said switches will open separately, preferably automatically, in response to an impermissible, excessive current flowing into the connecting field in question, as for example measured by the associated current direction measuring means, the switching device according to the invention provides a possibility of selectively disconnecting parts of the medium voltage network in which the switching device is incorporated.

One advantage of this is that, in contrast to the prior art, the ring can be closed when such a medium voltage switching device according to the invention is employed in a ring-shaped medium voltage network. After all, the medium voltage switching devices according to the invention make it possible to selectively disconnect a faulty part of the medium voltage network by separately opening the switches of the connecting fields of adjacent switching devices which are series-connected to the respective part of the network. The energy supply to the consumers on the low-voltage side will not be endangered in that case, because it is maintained uninterruptedly via the other connecting field of the switching device connected to the medium voltage network.

Besides enhancing the quality of the energy supply as regards availability, a closed ring increases the "hardness" of the net, which means that the medium voltage network, seen from the switching devices, has a lower impedance and will exhibit less voltage fluctuation in case of varying loads and the like. Accordingly, the novel medium voltage switching device according to the invention is more suitably geared to the specific medium voltage network structure than the prior art switching devices.

The switches employed in the medium voltage switching device according to the invention may be medium voltage power switches of a type which is known per se, such as vacuum switches, gas-filled switches, etc.

In order to meet safety requirements, the connecting fields may be arranged for being connected to earth in disconnected condition

To this end, the connecting fields may be provided with an isolating/earthing switch which is known per se. In a preferred embodiment of the invention, a single isolating/earthing switch connected to the connection of the connecting fields for isolating and earthing the third connecting field will suffice, wherein the switches of the first and the second connecting field are arranged for connecting the connecting fields to earth.

In order to provide optimum protection, the respective isolating/earthing switch preferably comprises a first and a second switching position for connecting the connection of the first and the second connecting field to the third connecting field or to earth, respectively, and a third switching position for connecting the third connecting field to earth.

A medium voltage switching device of this kind fitted with a single isolating/earthing switch according to the invention can be configured as a very compact unit having an advantageous price.

The medium voltage switching device according to the invention can be advantageously provided with means for operating the individual switches of the device by remote control and/or for the remote signalling of the switching position thereof.

By adding these communication facilities, a switching device to be used for various purposes is provided, as a result of which the quality of the electric power supply can be enhanced even further, also and particularly so with future more finely meshed medium voltage distribution networks.

The communication means in question can be arranged for signalling and communication of the series-connected switching devices between themselves or with a monitoring or control station, for example via the medium voltage network itself or radiographically. The use of the current direction measuring means in adjoining switching devices in a medium voltage network, for example, makes it possible to intervene selectively when both current direction measuring means in question signal the occurrence of an excessive current in each other's direction, because this indicates a probable fault in the part of the medium voltage network between the two switching devices.

Basically, the medium voltage switching device according to the invention is not limited to first and second connecting fields for connection to a medium voltage network, but it may include further connecting fields, for example for a star-shaped connection to the medium voltage network. In that case said further connecting fields must be arranged in a manner similar to the first and the second connecting fields, as described above.

The invention furthermore relates to a medium voltage distribution network comprising at least one medium voltage switching device as described above.

In a preferred embodiment, the invention comprises a medium voltage distribution network wherein the switches of series-connected connecting fields of adjacent switching devices are provided with means for operating said switches by remote control for the purpose of disconnecting faulty parts of the medium voltage network from each other.

The invention will be described in more detail hereafter with reference to the accompanying drawings.
Figure 1 is a circuit diagram of a typical medium voltage distribution network as known from the prior art, which comprises series-connected medium voltage switching devices.
Figure 2 is a circuit diagram of a medium voltage switching device as known from the prior art.
Figures 3 - 6 are circuit diagrams of embodiments of a medium voltage switching device according to the invention.

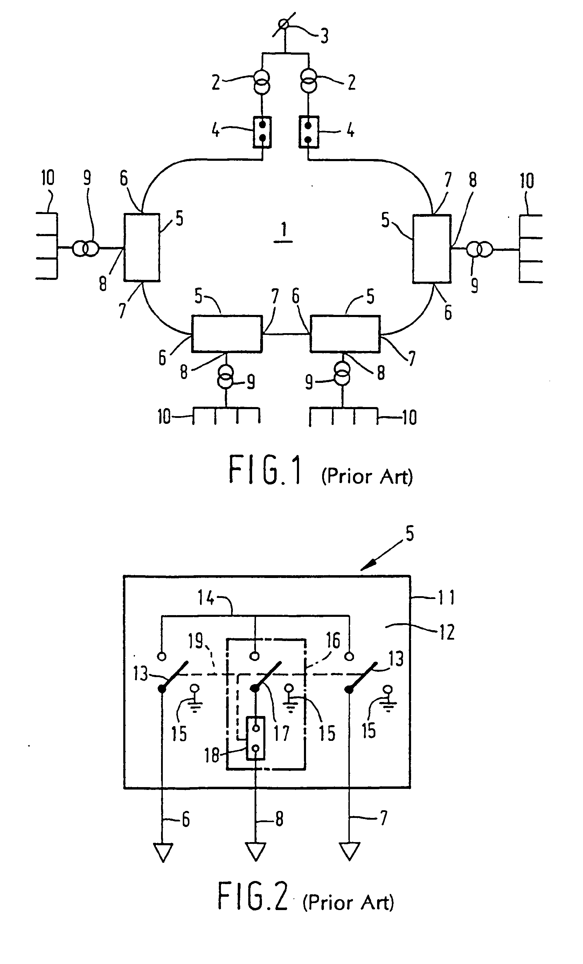

Figure 1 schematically shows a typically ring-shaped, open medium voltage distribution network 1, which operates on a voltage of 3 - 25 kV.

Each branch of the distribution network 1 is supplied with electric energy, via its own power transformer 2, from a high-voltage network 3. The term high voltage as used herein is understood to mean voltages higher than about 50 kV. A circuit breaker 4 is connected between each transformer 2 and a respective branch of the distribution network 1, which contact breaker becomes operative when overload and short-circuit currents occur in the respective branch of the distribution network.

The medium voltage distribution network 1 comprises several series-connected medium voltage switching devices 5 in each branch. Each medium voltage switching device 5 comprises series-connected first and second connecting fields 6, 7 for connection to the medium voltage network 1, and a third connecting field 8, to which power consumers 10 are connected via a transformer 9 and protection means (not shown). The transformers 9 transform the medium voltage to low voltage, that is, to voltages generally between 100 V and 1 kV.

Figure 2 schematically shows in more detail the structure of a prior art medium voltage switching device 5. In the illustrated embodiment, the switching device 5 comprises a hermetically sealed housing 11, in which an electrically insulating gas 12, such as SF₆ gas, is present. The first connecting field 6 and the second connecting field 7 each comprise a so-called circuit breaker or make and break switch 13, which make and break switches are connected in series via a connection 14. The make and break switches 13 are each arranged for connecting the respective first and second connecting fields 6, 7 to earth 15 in their open position.

Incorporated in the third connecting field 8 is a switch 16 comprising an isolating switch 17 and a vacuum power switch 18. Isolating switch 17 is arranged for connecting the connecting field 8 to earth in its open position. The switches 13, 17 and 18 in question can be operated by means of an operating mechanism 19. In the closed position of one or both of the make and break switches 13 and the switches 17 and 18 of a switching device 5, electric energy is supplied to the consumers 10 via the third connecting field 8.

When used in the ring-shaped network structure 1 as shown in Figure 1, the make and break switches 13 in the first and the second connecting field 6 and 7, respectively, of the adjacent switching devices 5 that are disposed furthest away from the high-voltage supply 3 will be open during normal operation without faults, so that ring 1 will be open.

In case of an impermissible, excessive current in the third connecting field 8, the switch 18 will become operative and interrupt the energy supply. Excessive currents in the first and/or the second connecting field 6, 7, for example due to a cable short-circuit in the medium voltage network 1, are cut off via the circuit breaker 4 associated with a respective branch, as a result of which the branch in question will become completely currentless. The power supply can be restored by first disconnecting the faulty part of the network with the adjacent switches 13 and then switching the other switches 13 so that all switching devices 5 will be provided with electric energy again.

For the sake of clarity only single-phase switches are shown in Figure 2. It will be appreciated by a person skilled in the art, however, that in practice three-phase switches will generally be used, which means that the respective switches 13, 17 and 18 are each three-phase switches.

A first drawback of this prior art medium voltage switching device 5 is the fact that a large number of switching elements are accommodated in the housing 11, among which the two make and break switches 13 and switch 16. Furthermore, the housing 11 must be gastight and explosion-resistant for a predetermined period of time. As a result, the prior art switching device 5 is not only relatively expensive, but it also takes up a considerably amount of space, which in practice also means relatively high installation costs.

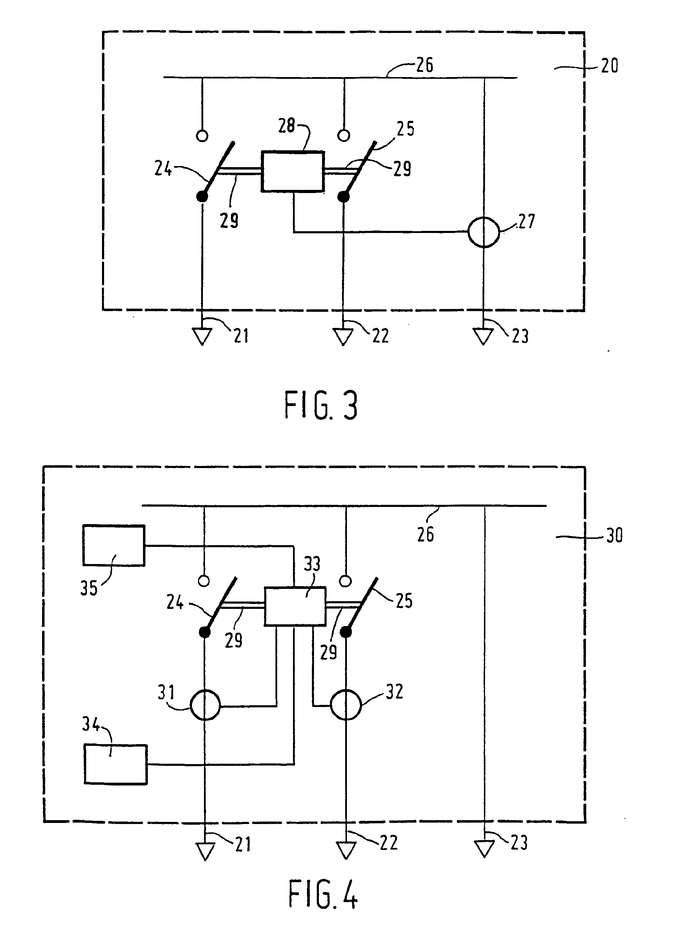

Figure 3 schematically shows an embodiment of a medium voltage switching device 20 according to the invention comprising a first connecting field 21, a second connecting field 22 and a third connecting field 23. Incorporated in the first connecting field 21 is a first switch like a power switch 24, whilst a second switch like a power switch 25 is incorporated in the second connecting field 22. The switches 24 and 25 are connected in series via a connection 26, wherein the third connecting field 23 is directly connected to the connection 26. Preferably, medium voltage power switches of the vacuum type or the gas-filled type (for example filled with SF₆ gas) are used.

In the illustrated embodiment, current measuring means 27 are coupled to the third connecting field 23 for measuring a current flowing into the third connecting field 23 during operation. Current measuring means which are suitable for this purpose are known per se in practice.

The switching device 20 further comprises control means 28 for opening the first and the second switches 24, 26 via operating means 29 in response to the occurrence of an undesirable, excessive current in the third connecting field 23 which is signalled by the current measuring means 27 coupled to the control means 28. Control means 28 and operating means 29 which are suitable for this purpose are known in practice and require no further explanation to a person skilled in the art.

When an impermissible current occurs in the third connecting field 23, both the first switch 24 and the second switch 25 will be opened, as a result of which the third connecting field 23 will become currentless.

By configuring the first and the second switch 24, 25 as a medium voltage power switch, the necessity of providing a separate power switch 16 in the third connecting field 8, as shown in Figure 2, is avoided. This means that the switching device 20 according to the invention can be of a more compact construction than the prior art switching device 5, but also, due to the absence of a switch, more favourable in price.

Assuming that the switching device 20 is incorporated in a ring-shaped medium voltage distribution network 1 as shown in Figure 1, a respective branch of the ring-shaped medium voltage network 1 will be interrupted when the two switches 24, 25 open. This need not to have any consequences for the other consumers connected to the medium voltage distribution network 1, however, because they can be reconnected to the energy supply 2, 3 via at least one of the connecting fields of their associated medium voltage switching device.

Overload and short-circuit currents in the third connecting field 23 occur only rarely, because the low-voltage networks to which consumers 10 are connected are by themselves well-protected and the control means 28 are so arranged that the switches 24, 25 respond selectively, that is, in the final instance in this case, to the protective devices in the low-voltage network. Opening of first and second switches 24, 25 will be necessary practically only in case of faults in the transformers connected to the third connecting field 23, such as the transformers 9 in Figure 1. Accordingly, it is preferable to dispose the transformers 9 as closely to the switching devices according to the invention as possible in order to exclude any faults in the connecting lines between the transformer and the third connecting field.

Only in the case that two or more series-connected switching devices 20 of a ring-shaped medium voltage distribution network experience an excessive current in the third connecting field 23 is there a risk of intermediate parts of the network being made completely currentless. Given the small possibility of a complete cut-off of a medium voltage switching device 20 as explained above, the possibility that two switching devices in a circuit must be cut off completely is practically negligible in practice. In the unlikely event that this should nevertheless be the case, the disconnection of faulty network cables may be a temporary emergency measure, for example.

This means that the quality of the energy supply in terms of availability or complete failure that can be realised with the switching device 20 according to the invention is at least comparable to that which can be realised with the prior art medium voltage switching devices as shown in Figure 2.

Figure 4 shows a further embodiment of a medium voltage switching device 30 according to the invention, wherein first and second current direction measuring means 31, 32 are coupled with the first and the second connecting field 21, 22, respectively. The control means 33 to which the two current direction measuring means 31, 32 are connected are arranged such that both the first and the second switch 24, 25 will be opened when the vectorial sum of the measured currents results in an undesirable, excessive current in the direction of the third connecting field 23.

Current direction measuring means 31, 32 which are suitable for the purpose of the invention are likewise known per se in practice, so that those skilled in the art will not require any further explanation.

According to the invention, the current direction measuring means 31, 32 can also be used advantageously for separately, individually and selectively opening the associated switch 24 or 25, however, when an undesirable, excessive current is signalled in the associated connecting field 21 or 22. This enables closed operation of the ring-shaped medium voltage distribution network 1 with the switching device 30 according to Figure 4. After all, excessive currents in the ring can be interrupted by selectively disconnecting the faulty connecting field in question via the associated power switch. In case of full ring operation, the energy supply to the consumers connected to the third connecting field 23 will be maintained uninterruptedly both on the one side and on the other side of the network interruption via the non-faulty connecting field, which constitutes a distinct quality enhancement in comparison to the prior art medium voltage switching device.

By providing communication means for the operation by remote control of the first and second switches 24, 25 as schematically indicated by numeral 34, it can be arranged that the switch of the connecting field of a further switching device 30 which is connected in series with the respective part of the network can likewise be opened. Also in this case it is possible to use the current direction measuring means 31, 32 in a respective connecting field advantageously.

Imagine a situation in which the switching field 21 of a switching device 30 is connected in series with the switching field of an adjacent switching device 30 via an intermediate cable portion of the medium voltage network. When the respective current direction measuring means 31 and 32 signal an impermissible current in each other's direction, which can be verified via the communication means 34, this indicates a fault, such as a cable short-circuit or earth leakage in the intermediate part of the network, for example. The faulty part of the network can be made completely current less in that case by opening the respective switches 24 and 25. If desired, it is also possible to effect a mutual, selective cut-off of series-connected switching devices via the communication means 34.

Since the switching device 30 according to the invention enables closed ring operation, not only the availability of energy in case of faults will be enhanced, but also the network characteristics, such as the "hardness" of the network, seen from a switching device, will be improved. A harder network means a smaller drop in voltage due to a lower impedance, smaller voltage fluctuations in case of load fluctuations, etc.

For monitoring purposes it is furthermore advantageous to signal the position of the switches 24, 25 in question by remote control, for example to a monitoring or control station, to which end signalling means 35 are provided. The signalling means 35 are arranged for remote signalling the open or closed position of the switches 24, 25.

Suitable communication means 34 and signalling means 35 for remote control are known per se in practice, and they can be arranged for exchanging data, for example by means of tone signalling, via the medium voltage distribution network 1 itself and/or by radio transmission .

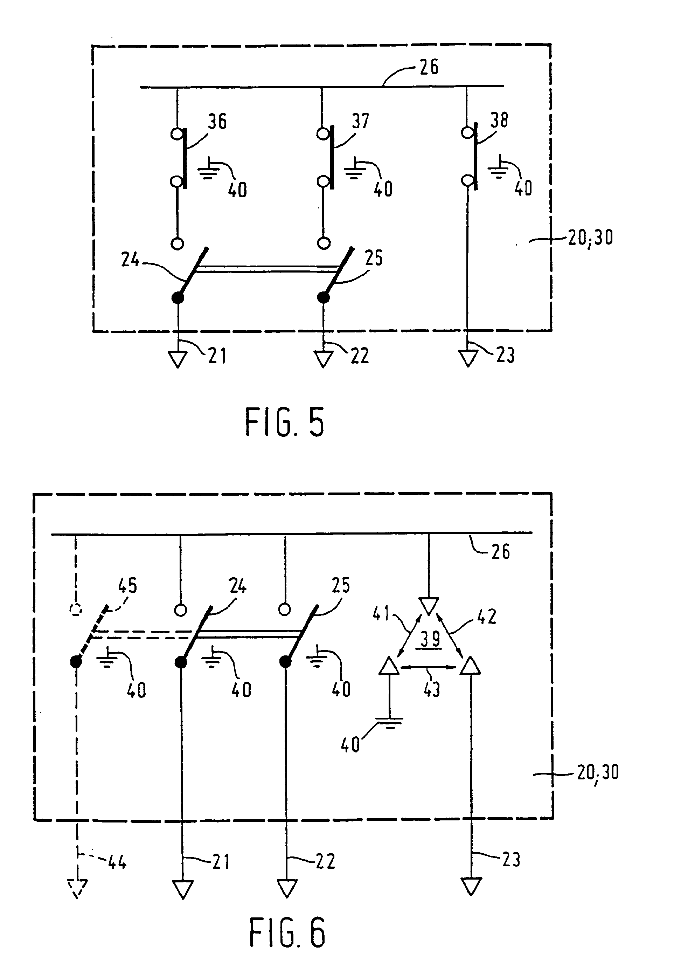

It may be necessary for safety reasons to incorporate isolating/earthing switches in the connecting fields, as is for example schematically shown in Figure 5, wherein an isolating switch 36, 37, 38 is incorporated in each of the connecting fields 21, 22, and 23, respectively. In this figure the control means and the current measuring means are not shown for the sake of simplicity. The isolating switches 36, 37, 38 are preferably of the type for connecting the respective connecting field to earth 40 in the open position of a respective isolating switch. In practice it is important not to operate the isolating switch 38 before the first and the second connecting field 21, 22 are currentless. The isolating switches 36, 37 must not be operated until the associated first and second switches 24 and 25, respectively, have been opened.

In another embodiment of the invention it is possible to leave out the isolating/earthing switch 38, if desired, because the third connecting field 23 can be made currentless in a safe manner via the other isolating/earthing switches 36, 37.

In preferred embodiment of the invention as schematically shown in Figure 6, only one isolating/earthing switch 39 is provided, which is connected to the connection 26 of the connecting fields 21, 22, 23. Preferably, said isolating/earthing switch 39 has three positions. A first position 41 for connecting the connection 26 to earth 40, a second position 42 for connecting the connection 26 to the third connecting field 23, and a third position 43 for connecting the third connecting field 23 to earth 40. All this in the manner illustrated in Figure 6.

In this embodiment the first and second switches 24, 25 in the first and the second connecting field 21 and 22, respectively, must be of the type wherein the associated connecting field is connected to earth 40 in the open position, as is schematically illustrated by earthing symbol 40 in Figure 6.

Although the invention has been illustrated by means of single-phase switching circuit diagrams in the above, it will be appreciated by a person skilled in the art that the medium voltage switching device 20, 30 according to the invention can be a multi-phase switching device, generally a three-phase switching device, wherein the switches in question are multi-phase switches, as are the current measuring means. The control means 28 and 33 as well as the operating means 29 will be arranged for opening multi-phase switches in that case, in accordance with the invention.

The medium voltage switching device according to the invention is furthermore not limited to a first and a second connecting field for connection to the medium voltage distribution network. A fourth or further connecting field 44 connected to the connection 26 may be provided, if desired, which is likewise provided with a respective switch such as a power switch 45 and current direction measuring means (not shown), if desired, similarly to the first and/or the second connecting field 21, 22. All this as schematically indicated by means of broken lines in Figure 6. Such a medium voltage switching device is particularly suitable for use in more finely meshed branched medium voltage distribution networks. The communication means 34 and/or the signalling means 35 may furthermore be arranged for remote switching and signalling of the position of for example all switches in the switching device according to the invention.

## Claims

1. A medium voltage switching device (20; 30) for electrical medium voltage networks, comprising series-connected first and second connecting fields (21, 22) each provided with a switch (24, 25) for connection to the medium voltage network, a third connecting field (23) connected to the connection (26) of the first and the second connecting fields (21, 22) for connecting electric power consumers, and means (27; 31, 32) for signalling an excessive current flowing into the third connecting field (23), **characterized in that** the switching device (20; 30) comprises control means (28; 33) connected to the switches (24, 25) of the first and the second connecting field (21, 22) and the current signalling means (27; 31, 32), to open the two switches (24, 25) in response to the occurrence of an excessive current in the third connecting field (23).

2. A medium voltage switching device (20; 30) according to claim 1, **characterized in that** the means for signalling the occurrence of an excessive current comprise current measuring means (27) connected to the third connecting field (23).

3. A medium voltage switching device (20; 30) according to claim 1, **characterized in that** the means for signalling the occurrence of an excessive current comprise first current direction measuring means (31) connected to the first connecting field (21) and second current direction measuring means (32) connected to the second connecting field (22), wherein the control means (33) are arranged for opening the switches (24, 25) when the vectorial sum of the current direction measuring means (31, 32) results in the occurrence of an excessive current in the direction of the third connecting field (23).

4. A medium voltage switching device (20; 30) according to any one of the preceding claims, **characterized in that** the switches (24, 25) of the first and the second connecting field (21, 22) are arranged for separately disconnecting said connecting fields (21, 22) in response to an, excessive current flowing into a corresponding connecting field (21, 22).

5. A medium voltage switching device (20; 30) according to any one of the preceding claims, **characterized in that** said switches (24, 25) are medium voltage power switches.

6. A medium voltage switching device (20; 30) according to any one of the preceding claims, **characterized in that** each of said connecting fields (21, 22, 23) is arranged for being connected to earth (40) in disconnected condition.

7. A medium voltage switching device (20; 30) according to claim 6, **characterized in that** each of said connecting fields (21, 22, 23) is provided with an isolating/earthing switch (36, 37, 38).

8. A medium voltage switching device (20; 30) according to claim 6, **characterized by** an isolating/earthing switch (39) connected to the connection (26) of the connecting fields (21, 22), wherein the switches (24, 25) of the first and the second connecting field (21, 22) are arranged for connecting said connecting fields (21, 22) to earth (40).

9. A medium voltage switching device (20; 30) according to claim 8, **characterized in that** the isolating/earthing switch (39) comprises a first and a second switching position (41, 42) for connecting the connection (26) of the first and the second connecting field (21, 22) to the third connecting field (23) or to earth (40), and a third switching position (43) for connecting the third connecting field (23) to earth (40).

10. A medium voltage switching device (30) according to any one of the preceding claims, **characterized by** means (34) for operating the individual switches (24, 25) of the device (30) by remote control.

11. A medium voltage switching device (30) according to any one of the preceding claims, **characterized by** means (35) for remote signalling of the switch position of the switches (24, 25) of the device (30).

12. A medium voltage switching device (20; 30) according to any one of the preceding claims, **characterized by** at least one further connecting field (44) connected to the connection (26) of the first and the second connecting field (21, 22) and arranged similarly to said first or second connecting field (21, 22).

13. A medium voltage switching device (20; 30) according to any one of the preceding claims, **characterized in that** said switches (24, 25) are multi-phase switches.

14. A medium voltage distribution network (1) comprising at least one medium voltage switching device (20; 30) according to any one of the preceding claims.

15. A medium voltage distribution network (1) according to claim 14, **characterized by** several medium voltage switching devices (20; 30) connected in series to a source (3) of medium voltage with their first and second connecting fields (21, 22) and comprising means (34) for operating the switches (24, 25) by remote control, in a manner which allows interdependent opening of switches (24, 25) of series-connected connecting fields (21, 22) of adjacent switching devices (20; 30).

## Patentansprüche

1. Eine Mittelspannungsschaltvorrichtung (20; 30) für elektrische Mittelspannungsnetzwerke, bestehend aus einem in Serie geschalteten ersten und zweiten Anschlussfeld (21, 22), jedes davon mit einem Schalter (24, 25) zum Anschließen an das Mittelspannungsnetzwerk ausgestattet, sowie einem dritten Anschlussfeld (23), das mit dem Anschluss (26) der ersten beiden Felder (21, 22) verbunden ist und zum Anschließen von Verbrauchern elektrischer Leistung sowie als Vorrichtung (27; 31, 32) zum Signalisieren von übermäßiger Stromstärke, die in das dritte Anschlussfeld fließt (23), dient, **dadurch gekennzeichnet, dass** das Schaltgerät (20; 30) aus einer Steuereinheit (28; 33) besteht, die an die Schalter (24, 25) des ersten und zweiten Anschlussfeldes (21, 22) und an die Stromsignalvorrichtung (27; 31, 32) angeschlossen ist, um die beiden Schalter (24, 25) im Falle von übermäßiger Stromstärke im dritten Anschlussfeld (23) zu öffnen.

2. Eine Mittelspannungsschaltvorrichtung (20; 30) gemäß Anspruch 1, **dadurch gekennzeichnet, dass** die Vorrichtung zum Signalisieren von übermäßiger Stromstärke ein Strommessgerät (27) umfasst, das an das dritte Anschlussfeld angeschlossen ist (23).

3. Eine Mittelspannungsschaltvorrichtung (20; 30) gemäß Anspruch 1, **dadurch gekennzeichnet, dass** die Vorrichtung zum Signalisieren von übermäßiger Stromstärke aus einem ersten Stromrichtungs-Messgerät (31), welches an das erste Anschlussfeld (21) angeschlossen ist, und einem zweiten Stromrichtungs-Messgerät (32), welches an das zweite Anschlussfeld (22) angeschlossen ist, besteht, wobei die Steuereinheit (33) dabei so ausgelegt ist, dass sich die Schalter (24, 25) öffnen, wenn aufgrund der Vektorsumme des Stromrichtungs-Messgeräts (31, 32) übermäßiger Strom in Richtung des dritten Anschlussfeldes (23) fließt.

4. Eine Mittelspannungsschaltvorrichtung (20; 30) gemäß einem der vorherigen Ansprüche, **dadurch gekennzeichnet, dass** die Schalter (24, 25) des ersten und zweiten Anschlussfeldes (21, 22) so ausgelegt sind, dass die Verbindung zu den Anschlussfeldern (21, 22) bei übermäßigem Stromfluss zu einem entsprechenden Anschlussfeld (21, 22) separat unterbrochen werden kann.

5. Eine Mittelspannungsschaltvorrichtung (20; 30) gemäß einem der vorherigen Ansprüche, **dadurch gekennzeichnet, dass** es sich bei den Schaltern (24, 25) um Mittelspannungs-Leistungsschalter handelt.

6. Eine Mittelspannungsschaltvorrichtung (20; 30) gemäß einem der vorherigen Ansprüche, **dadurch gekennzeichnet, dass** jedes der Felder (21, 22, 23) so ausgelegt ist, dass es trotz unterbrochener Verbindung geerdet (40) werden kann.

7. Eine Mittelspannungsschaltvorrichtung (20; 30) gemäß Anspruch 6, **dadurch gekennzeichnet, dass** jedes der Anschlussfelder (21, 22, 23) mit einem Trenn-/Erdungsschalter (36, 37, 38) ausgestattet ist.

8. Eine Mittelspannungsschaltvorrichtung (20; 30) gemäß Anspruch 6, **dadurch gekennzeichnet, dass** ein Trenn-/Erdungsschalter (39) an den Anschluss (26) der Anschlussfelder (21, 22) angeschlossen ist, wobei die Schalter (24, 25) des ersten und zweiten Anschlussfeldes (21, 22) so ausgelegt sind, dass die Anschlussfelder (21, 22) geerdet (40) werden können.

9. Eine Mittelspannungsschaltvorrichtung (20; 30) gemäß Anspruch 8, **dadurch gekennzeichnet, dass** der Trenn-/Erdungsschalter (39) eine erste und zweite Schaltposition (41, 42) aufweist, damit der Anschluss (26) des ersten und zweiten Anschlussfeldes (21, 22) entweder zum dritten Anschlussfeld (23) verbunden oder geerdet (40) werden kann, sowie eine dritte Schaltposition (43) zum Erden (40) des dritten Anschlussfeldes (23) vorhanden ist.

10. Eine Mittelspannungsschaltvorrichtung (30) gemäß einem der vorherigen Ansprüche, mit einer Vorrichtung (34) zum Betätigen der einzelnen Schalter (24, 25) des Geräts (30) mittels Fernbedienung.

11. Eine Mittelspannungsschaltvorrichtung (30) gemäß einem der vorherigen Ansprüche, mit einer Vorrichtung (35) zur Fernsignalisierung der Schaltposition der Schalter (24, 25) des Geräts (30).

12. Eine Mittelspannungsschaltvorrichtung (20; 30) gemäß einem der vorherigen Ansprüche, mit zumindest einem weiteren Anschlussfeld (44), das an den Anschluss (26) des ersten und zweiten Anschlussfeldes (21, 22) angeschlossen ist und ähnlich wie das erstes und zweites Anschlussfeld (21, 22) angeordnet ist.

13. Eine Mittelspannungsschaltvorrichtung (20; 30) gemäß einem der vorherigen Ansprüche, **dadurch gekennzeichnet, dass** die Schalter (24, 25) Mehrphasen-Schalter sind.

14. Ein Mittelspannungs-Verteilernetzwerk (1), bestehend aus mindestens einem Mittelspannungs-Schaltgerät (20; 30) gemäß einem der vorherigen Ansprüche.

15. Ein Mittelspannungs-Verteilernetzwerk (1) gemäß Anspruch 14, bestehend aus mehreren Mittelspannungs-Schaltvorrichtungen (20; 30), die über ihr erstes und zweites Anschlussfeld (21, 22) in Serie an eine Mittelspannungsquelle (3) angeschlossen sind und als Vorrichtung (34) dienen, um die Schalter (24, 25) mittels Fernsteuerung auf eine Art und Weise zu bedienen, dass ein unabhängiges Öffnen der Schalter (24, 25) seriell geschalteter Anschlussfelder (21, 22) von angrenzenden Schaltgeräten (20; 30) aus möglich ist.

## Revendications

1. Dispositif de commutation moyenne tension (20 ; 30) pour réseaux électriques de moyenne tension, comprenant des premier et deuxième champs de connexion (21, 22) connectés en série pourvus chacun d'un commutateur (24, 25) pour la connexion au réseau de moyenne tension, un troisième champ de connexion (23) connecté à la connexion (26) du premier et du deuxième champs de connexion (21, 22) pour connecter des clients de courant électrique, et des moyens (27 ; 31, 32) pour signaliser un courant excessif s'écoulant dans le troisième champ de connexion (23), **caractérisé en ce que** le dispositif de commutation (20 ; 30) comprend des moyens de commande (28 ; 33) connectés aux commutateurs (24, 25) du premier et du deuxième champ de connexion (21, 22) et aux moyens de signalisation de courant (27 ; 31, 32) pour ouvrir les deux commutateurs (24, 25) en réponse à l'apparition d'un courant excessif dans le troisième champ de connexion (23).

2. Dispositif de commutation moyenne tension (20 ; 30) selon la revendication 1, **caractérisé en ce que** les moyens pour signaliser l'apparition d'un courant excessif comprennent des moyens de mesure de courant (27) connectés au troisième champ de connexion (23).

3. Dispositif de commutation moyenne tension (20 ; 30) selon la revendication 1, **caractérisé en ce que** les moyens pour signaliser l'apparition d'un courant excessif comprennent des premiers moyens de mesure du sens du courant (31) connectés au premier champ de connexion (21) et des seconds moyens de mesure du sens du courant (32) connectés au second champ de connexion (22), dans lequel les moyens de commande (33) sont agencés pour ouvrir les commutateurs (24, 25) lorsque la somme vectorielle des moyens de mesure du sens du courant (31, 32) conduit à l'apparition d'un courant excessif dans le sens du troisième champ de connexion (23).

4. Dispositif de commutation moyenne tension (20 ; 30) selon l'une quelconque des revendications précédentes, **caractérisé en ce que** les commutateurs (24, 25) du premier et du deuxième champ de connexion (21, 22) sont agencés pour déconnecter séparément lesdits champs de connexion (21, 22) en réponse à un courant excessif s'écoulant dans un champ de connexion correspondant (21, 22).

5. Dispositif de commutation moyenne tension (20 ; 30) selon l'une quelconque des revendications précédentes, **caractérisé en ce que** lesdits commutateurs (24, 25) sont des interrupteurs de moyenne tension.

6. Dispositif de commutation moyenne tension (20 ; 30) selon l'une quelconque des revendications précédentes, **caractérisé en ce que** chacun desdits champs de connexion (21, 22, 23) est agencé pour être connecté à la terre (40) à l'état déconnecté.

7. Dispositif de commutation moyenne tension (20 ; 30) selon la revendication 6, **caractérisé en ce que** chacun desdits champs de connexion (21, 22, 23) est pourvu d'un commutateur d'isolement/de mise à la terre (36, 37, 38).

8. Dispositif de commutation moyenne tension (20 ; 30) selon la revendication 6, **caractérisé par** un commutateur d'isolement/de mise à la terre (39) connecté à la connexion (26) des champs de connexion (21, 22), dans lequel les commutateurs (24, 25) du premier et du deuxième champ de connexion (21, 22) sont agencés pour connecter lesdits champs de connexion (21, 22) à la terre (40).

9. Dispositif de commutation moyenne tension (20 ; 30) selon la revendication 8, **caractérisé en ce que** le commutateur d'isolement/de mise à la terre (39) comprend une première et une deuxième position de commutation (41, 42) pour connecter la connexion (26) du premier et du deuxième champ de connexion (21, 22) au troisième champ de connexion (23) ou à la terre (40), et une troisième position de commutation (43) pour connecter le troisième champ de connexion (23) à la terre (40).

10. Dispositif de commutation moyenne tension (30) selon l'une quelconque des revendications précédentes, **caractérisé par** des moyens (34) pour faire fonctionner les commutateurs individuels (24, 25) du dispositif (30) par une télécommande.

11. Dispositif de commutation moyenne tension (30) selon l'une quelconque des revendications précédentes, **caractérisé par** des moyens (35) pour signaliser à distance la position de commutation des commutateurs (24, 25) du dispositif (30).

12. Dispositif de commutation moyenne tension (20 ; 30) selon l'une quelconque des revendications précédentes, **caractérisé par** au moins un autre champ de connexion (44) connecté à la connexion (26) du premier et du deuxième champ de connexion (21, 22) et agencé de manière similaire audit premier ou deuxième champ de connexion (21, 22).

13. Dispositif de commutation moyenne tension (20 ; 30) selon l'une quelconque des revendications précédentes, **caractérisé en ce que** lesdits commutateurs (24, 25) sont des commutateurs multiphase.

14. Réseau de distribution de moyenne tension (1) comprenant au moins un dispositif de commutation moyenne tension (20 ; 30) selon l'une quelconque des revendications précédentes.

15. Réseau de distribution de moyenne tension (1) selon la revendication 14, **caractérisé par** plusieurs dispositifs de commutation moyenne tension (20 ; 30) connectés en série à une source (3) de moyenne tension avec leurs premier et deuxième champs de connexion (21, 22) et comprenant des moyens (34) pour faire fonctionner les commutateurs (24, 25) par une télécommande d'une manière qui permet l'ouverture interdépendante des commutateurs (24, 25) des champs de connexion (21, 22) connectés en série de dispositifs de commutation adjacents (20 ; 30).
